# EUROPÄISCHE PATENTSCHRIFT

(11) **EP 3 998 134 B1**
(45) Veröffentlichungstag und Bekanntmachung des Hinweises auf die Patenterteilung: **28.02.2024**
(21) Anmeldenummer: 22155966.9
(22) Anmeldetag: 09.02.2022
(51) Int. Cl.: B23Q 1/70

(54) **MOTORSPINDEL**
MOTOR SPINDLE
BROCHE DE MOTEUR

(43) Veröffentlichungstag der Anmeldung: 18.05.2022
(73) Patentinhaber: Maschinenfabrik Berthold Hermle AG, 78559 Gosheim (DE)
(72) Erfinder: Mattes, Uwe, 78588 Denkingen (DE); Ademi, Ajet, 78628 Rottweil (DE); Bernhard, Franz-Xaver, 78549 Spaichingen (DE)
(74) Vertreter: Patentanwälte Magenbauer & Kollegen Partnerschaft mbB

(56) Entgegenhaltungen:
- DE-A1- 10 027 750
- DE-A1-102011 116 703

## Beschreibung

Die Erfindung betrifft eine Motorspindel zum Antreiben eines Bearbeitungswerkzeugs, mit einem längs einer Statorachse erstreckten, hülsenförmigen Stator, der ein erstes Magnetsystem, eine erste Kupplungsaufnahme und eine zweite Kupplungsaufnahme aufweist, und mit einem Rotor, der eine längs einer Rotorachse erstreckte Rotorwelle, ein zweites Magnetsystem, ein erstes Kupplungsteil und ein zweites Kupplungsteil aufweist, wobei das erste Kupplungsteil zur Festlegung an der ersten Kupplungsaufnahme ausgebildet ist und mit einem als axiales Festlager ausgebildeten ersten Drehlager drehbeweglich um die Rotorachse an der Rotorwelle gelagert ist und wobei das zweite Kupplungsteil zur Festlegung an der zweiten Kupplungsaufnahme ausgebildet ist und mit einem als axiales Loslager ausgebildeten zweiten Drehlager drehbeweglich um die Rotorachse an der Rotorwelle gelagert ist, wobei das zweite Drehlager einen auf der Rotorwelle festgelegten Innenring und einen koaxial zum Innenring angeordneten und am zweiten Kupplungsteil festgelegten Außenring umfasst, der mit dem Innenring einen kreisringförmigen Lagerspalt begrenzt, in dem mehrere Wälzkörper aufgenommen sind, wobei das zweite Kupplungsteil parallel zur Rotorachse zwischen einer ersten Funktionsstellung und einer zweiten Funktionsstellung längs eines Verstellwegs axialbeweglich an der Rotorwelle aufgenommen ist.

Aus der DE 10 2011 116 703 A1 ist eine motorisch angetriebene Werkzeugmaschineneinheit, insbesondere eine Motorspindel, bekannt. Diese umfasst eine Rotoreinheit mit einer um eine Drehachse drehbare Rotorwelle, wobei zumindest im ausgebauten Zustand die Rotoreinheit wenigstens eine im Endbereich einer Werkzeug- und/oder Werkstückaufnahme angeordnete, erste Lagereinheit sowie eine am entgegen gerichteten Endbereich angeordnete, zweite Lagereinheit zum Lagern der Rotorwelle in einer Statoreinheit im eingebauten Zustand umfasst, wobei die zweite Lagereinheit als Loslager der Rotorwelle ausgebildet ist und wobei wenigstens eine Entspannungsvorrichtung zum Entspannen des Loslagers im eingebauten Zustand vorgesehen ist.

Die Aufgabe der Erfindung besteht darin, eine Motorspindel bereitzustellen, mit der eine hochpräzise und reproduzierbare Auswechslung des Rotors ermöglicht wird.

Diese Aufgabe wird für eine Motorspindel der eingangs genannten Art mit den Merkmalen des Anspruchs 1 gelöst. Hierbei ist vorgesehen, dass für den gesamten Verstellweg zwischen einer ersten Axialfläche des Innenrings und dem zweiten Kupplungsteil ein erster Abstand vorliegt und das zwischen einer zweiten Axialfläche des Innenrings, die der ersten Axialfläche abgewandt ist, und dem zweiten Kupplungsteil ein zweiter Abstand vorliegt. Dementsprechend ist vorgesehen, dass unabhängig von der relativen Position des zweiten Kupplungsteils, das längs des Stellwegs zwischen der ersten Funktionsstellung und der zweiten Funktionsstellung gegenüber der Rotorwelle bewegt werden kann, stets sowohl zwischen der ersten Axialfläche des Innenrings und dem zweiten Kupplungsteil als auch zwischen der zweiten Axialfläche des Innenrings und dem Kupplungsteil jeweils ein durch den ersten Abstand bzw. zweiten Abstand definierter erster Luftspalt bzw. zweiter Luftspalt vorliegt. Sowohl der erste Abstand als auch der zweite Abstand weisen längs des gesamten Verstellwegs stets einen Wert größer Null auf. Durch diese Eigenschaft wird beim Betrieb der Motorspindel sichergestellt, dass zwischen dem zweiten Kupplungsteil und dem Innenring des zweiten Drehlagers keine Berührung auftritt, die zu einer Beschädigung des zweiten Drehlagers führen könnte. Ferner wird durch diese Eigenschaft bei ausgebautem Rotor sichergestellt, dass das zweite Drehlager nicht unbeabsichtigt demontiert werden kann.

Für eine Montage des Rotors in den Stator ist vorgesehen, dass das erste Kupplungsteil an der ersten Kupplungsaufnahme aufgenommen und dort festgelegt wird, so dass das erste Drehlager, das als axiales Festlager ausgebildet ist, eine rotatorische Lagerung der Rotorwelle gegenüber dem Stator an einer ersten Lagerstelle gewährleistet.

Ferner ist vorgesehen, dass das zweite Kupplungsteil, das auch als Lagerhülse bezeichnet wird, an der zweiten Kupplungsaufnahme, die auch als Lagersitz bezeichnet wird, festgelegt wird, so dass das als axiales Loslager ausgebildete zweite Drehlager eine zweite Lagerstelle für die Rotorwelle bildet. Durch die Ausgestaltung des ersten Drehlagers als axiales Festlager und die Ausgestaltung des zweiten Drehlagers als axiales Loslager wird erreicht, dass im Betrieb der Motorspindel auftretende Wärmeeinflüsse, die zu unterschiedlichen Ausdehnungen des Stators und des Rotors führen können, durch eine Verschiebung im zweiten Drehlager ausgeglichen werden können und nicht zu einer unerwünschten Einleitung von Kräften auf das erste Drehlager und das zweite Drehlager führen.

Beispielhaft kann vorgesehen sein, dass das erste Drehlager als Anordnung mehrerer Wälzlager, vorzugsweise mehrerer Kugellager, insbesondere mehrerer Schrägkugellager, ausgebildet ist, wobei die Wälzlager besonders bevorzugt als Schrägkugellager in einer O-Anordnung angeordnet sein können.

Das zweite Drehlager ist als axiales Loslager konfiguriert, so dass unterschiedliche Wärmeausdehnungen von Stator und Rotor durch eine axiale Verlagerung des auf der Rotorwelle festgelegten Innenrings gegenüber dem am zweiten Kupplungsteil festgelegten Außenring ausgeglichen werden können. Hierbei ist vorgesehen, dass die im kreisringförmigen Lagerspalt zwischen dem Innenring und dem Außenring des zweiten Drehlagers angeordneten Wälzkörper ebenfalls auf eine axiale Relativbeweglichkeit zwischen Innenring und Außenring angepasst sind. Bevorzugt ist vorgesehen, dass der Verstellweg, entlang dem das zweite Kupplungsteil zwischen der ersten Funktionsstellung und der zweiten Funktionsstellung längs der Rotorachse bewegt werden kann, kleiner gewählt ist als eine durch die Konstruktion des zweiten Drehlagers bestimmte maximale Verschiebestrecke, die der Außenring gegenüber dem Innenring zurücklegen kann, bevor es zu einem Austritt von Wälzkörpern aus dem Lagerspalt kommt. Ferner ist vorgesehen, dass der mit einem Sicherheitszuschlag versehene Verstellweg größer als ein maximaler Ausdehnungsunterschied zwischen Rotor und Stator ist, wie er bei einem bestimmungsgemäßen Betrieb der Motorspindel auftreten kann.

Bevorzugt ist vorgesehen, dass der Innenring kreiszylindrisch, gegebenenfalls mit einer konischen Innenumfangsfläche, ausgebildet ist und dass die erste Axialfläche des Innenrings, die auch als erste axiale Stirnfläche bezeichnet werden kann, sowie die zweite Axialfläche des Innenrings, die auch als zweite axiale Stirnfläche bezeichnet werden kann, jeweils kreisringförmig ausgebildet sind. Besonders bevorzugt ist vorgesehen, dass die erste Axialfläche in einer ersten Axialebene angeordnet ist, die quer zur Rotorachse der Rotorwelle ausgerichtet ist und dass die zweite Axialfläche in einer zweiten Axialebene angeordnet ist, die ebenfalls quer zur Rotorachse der Rotorwelle ausgerichtet ist, so dass die beiden Axialebenen parallel zueinander ausgerichtet sind.

Ferner ist vorgesehen, dass sowohl der erste Abstand zwischen der ersten Axialfläche des Innenrings und dem zweiten Kupplungsteil als auch der zweite Abstand zwischen der zweiten Axialfläche des Innenrings und dem zweiten Kupplungsteil für den gesamten Verstellweg zwischen der ersten Funktionsstellung und der zweiten Funktionsstellung nicht verschwindet. Dies bedeutet, dass zwischen dem zweiten Kupplungsteil und dem Innenring in axialer Richtung sowohl bezüglich der ersten Axialfläche als auch bezüglich der zweiten Axialfläche stets ein erster bzw. zweiter Luftspalt vorhanden ist und dementsprechend keine Berührung zwischen dem zweiten Kupplungsteil und dem Innenring vorliegt.

Beispielhaft ist vorgesehen, dass das zweite Kupplungsteil bezogen auf die Rotorachse der Rotorwelle zumindest im Wesentlichen rotationssymmetrisch ausgebildet ist und in einer die Rotorachse umfassenden Querschnittsebene eine U-förmige Profilierung aufweist, wodurch eine in radialer Richtung nach innen offene Umfangsnut gebildet wird, in der der Außenring des zweiten Drehlagers kraftschlüssig und/oder formschlüssig aufgenommen wird.

Bevorzugt ist das Kupplungsteil aus zwei ringförmigen Einzelteilen aufgebaut, die in axialer Richtung miteinander verbunden sind und die hierdurch die Aufnahme des Außenrings in die Umfangsnut ermöglichen.

Vorteilhafte Weiterbildungen der Erfindung sind Gegenstand der Unteransprüche.

Zweckmäßig ist es, wenn an einer Außenoberfläche des zweiten Kupplungsteils wenigstens eine, insbesondere in radialer Richtung nach innen vertiefte, Riegelausnehmung ausgebildet ist und wenn die zweite Kupplungsaufnahme an einer Innenumfangsfläche mit mehreren, insbesondere in einheitlicher Winkelteilung angeordneten, Riegeln versehen ist, wobei die Riegel zwischen einer, insbesondere radial außenliegenden, Freigabestellung und einer, insbesondere radial innenliegenden, Verriegelungsstellung einstellbar und in der Verriegelungsstellung für einen formschlüssigen Eingriff in die Riegelausnehmung ausgebildet sind. Durch die Wechselwirkung zwischen dem wenigstens Riegel, der der zweiten Kupplungsaufnahme des Stators zugehörig ist, und der Riegelausnehmung in der Außenoberfläche des zweiten Kupplungsteils, das dem Rotor zugehörig ist, kann eine, insbesondere axiale, Festlegung des zweiten Kupplungsteils an der zweiten Kupplungsaufnahme bewirkt werden. Vorzugsweise sind die beiden Kupplungsaufnahmen sowie die beiden Kupplungsteile derart konfiguriert, dass eine Kopplung des Rotors mit dem Stator durch die Verriegelung des ersten Kupplungsteils in der ersten Kupplungsaufnahme und des zweiten Kupplungsteils in der zweiten Kupplungsaufnahme gewährleistet ist. Hierzu ist es vorteilhaft, wenn der wenigstens eine Riegel oder die Mehrzahl von Riegeln zwischen einer radial außen liegenden Freigabestellung und einer radial innenliegenden Verriegelungsstellung eingestellt werden können. Bevorzugt ist vorgesehen, dass der wenigstens eine Riegel oder die Mehrzahl von Riegeln in der Verriegelungsstellung radial nach innen gerichtete Riegelkräfte, die insbesondere auf die Rotorachse des Rotors ausgerichtet sind, von der zweiten Kupplungsaufnahme des Stators auf das zweite Kupplungsteil des Rotors übertragen können. Besonders vorteilhaft ist es, wenn aufgrund der vom jeweiligen Riegel ausgeübten Riegelkraft, die auch als Normalkraft für das zweite Kupplungsteil bezeichnet werden kann, sowohl eine radial nach innen gerichtete Kraftkomponente als auch eine in axialer Richtung längs der Rotorachse ausgerichtete Kraftkomponente auf den Rotor ausgeübt wird. Hierdurch wird der Rotor sowohl in radialer Richtung als auch in axialer Richtung zuverlässig am Stator festgelegt.

Bevorzugt ist vorgesehen, dass die Riegel in der Verriegelungsstellung, insbesondere ausschließlich, an einer Schrägfläche der Riegelausnehmung anliegen, wobei die Schrägfläche in einem spitzen Winkel zur Rotorachse ausgerichtet ist, um eine längs der Rotorachse in Richtung der Verriegelungsstellung ausgerichtete Axialriegelkraft von der zweiten Kupplungsaufnahme auf das zweite Kupplungsteil einzuleiten. Die Riegelausnehmung kann wahlweise als lokal begrenzte Bohrung oder als umlaufende Nut in einer Außenumfangsfläche des zweiten Kupplungsteils ausgebildet sein. Entscheidend für die zuverlässige Verriegelung des Rotors am Stator ist es, dass die Riegelausnehmung eine Schrägfläche aufweist, an der der Riegel in der Verriegelungsstellung zur Anlage kommt. Die Schrägfläche kann dabei insbesondere einer Berührfläche zwischen dem Riegel und der Riegelausnehmung entsprechen. Entscheidend ist, dass für die Berührfläche bzw. Schrägfläche die Bedingung erfüllt sein muss, dass diese in einem spitzen Winkel zur Rotorachse ausgerichtet ist. Dies kann angesichts der zu beachtenden Toleranzen für die Geometrien des Riegels, der Schrägfläche sowie der beiden Kupplungsaufnahmen und der zugeordneten Kupplungsteile in vorteilhafter Weise dadurch verwirklicht werden, dass ein ganzer Berührbereich, in dem eine Berührung zwischen Riegel und Riegelausnehmung möglich ist, einen spitzen Winkel zur Rotorachse einnimmt. Unter der Annahme, dass der Riegel eine radial nach innen auf die Rotorachse ausgerichtete und vorzugsweise quer zur Rotorachse verlaufende Riegelkraft auf die Schrägfläche ausübt, ergibt sich aufgrund der Ausrichtung der Schrägfläche eine Aufspaltung dieser Riegelkraft in eine radial nach innen gerichtete Kraftkomponente und in eine parallel zur Rotorachse ausgerichtete weitere Kraftkomponente. Hiermit wird die gewünschte radiale und axiale Verriegelung des Rotors am Stator gewährleistet.

Bei einer alternativen Ausgestaltung des Riegels ist vorgesehen, dass der Riegel jeweils entlang eines Riegelwegs zwischen der Freigabestellung und der Verriegelungsstellung einstellbar ist, wobei der Riegelweg in einem spitzen Winkel zur Rotorachse ausgerichtet ist. Bevorzugt kann in diesem Fall vorgesehen werden, dass Riegelwege mehrerer Riegel, die in der zweiten Kupplungsaufnahme aufgenommen sind, auf einer kegelabschnittsförmig geformten Hüllfläche angeordnet sind.

In weiterer Ausgestaltung der Erfindung ist vorgesehen, dass eine Innenoberfläche der zweiten Kupplungsaufnahme und eine Außenoberfläche des zweiten Kupplungsteils zumindest bereichsweise geometrisch ähnlich, insbesondere jeweils kegelmantelabschnittsförmig, ausgebildet sind, um eine formschlüssige Aufnahme des zweiten Kupplungsteils in der zweiten Kupplungsaufnahme sowohl in radialer Richtung als auch in einer längs der Rotorachse ausgerichteten Verriegelungsrichtung zu gewährleisten. Durch eine derartige geometrische Gestaltung der zweiten Kupplungsaufnahme und des zweiten Kupplungsteils kann zum einen eine hochpräzise Zentrierung des zweiten Kupplungsteils gegenüber der zweiten Kupplungsaufnahme bewirkt werden. Zum anderen wird durch die Kegelform, die die zweite Kupplungsaufnahme und das zweite Kupplungsteil jeweils bereichsweise aufweisen, ein vorteilhafter Demontagevorgang für das zweite Kupplungsteil aus der zweiten Kupplungsaufnahme unterstützt. Dies ist darauf zurückzuführen, dass bereits eine geringfügige axiale Verschiebung des zweiten Kupplungsteils gegenüber der zweiten Kupplungsaufnahme zu einer vollständigen Ablösung der sich gegenüberliegenden Innenoberfläche der zweiten Kupplungsaufnahme und der Außenoberfläche des zweiten Kupplungsteils führt. Bevorzugt ist ein Kegelwinkel für die kegelmantelabschnittsförmigen Oberflächen in einem Bereich zwischen 17 und 19 Grad vorgesehen, um einerseits eine vorteilhafte Zentrierungswirkung zwischen der zweiten Kupplungsaufnahme und dem zweiten Kupplungsteil zu verwirklichen und andererseits eine unerwünschte Selbsthemmung zu vermeiden.

Bei einer Ausgestaltung der Erfindung ist vorgesehen, dass an der Rotorwelle ein erster Linearanschlag ausgebildet ist, an dem das zweite Kupplungsteil in der ersten Funktionsstellung anliegt und dass an der Rotorwelle ein zweiter Linearanschlag ausgebildet ist, an dem das zweite Kupplungsteil in der zweiten Funktionsstellung anliegt. Die Aufgabe des ersten Linearanschlag und des zweiten Linearanschlag besteht darin, eine axiale Verschiebung des zweiten Kupplungsteils mit dem darin aufgenommenen Außenring des zweiten Drehlagers in einem ausgebauten Zustand des Rotors auf einen vorgegebenen Verstellweg zu begrenzen. Dabei ist der Verstellweg derart gewählt, dass stets sichergestellt ist, dass die Wälzkörper des zweiten Drehlagers im Lagerspalt zwischen dem Innenring und dem Außenring verbleiben. Ferner ist der Verstellweg derart gewählt, dass eventuell auftretende Längenänderungen zwischen Rotor und Stator nicht dazu führen, dass das zweite Kupplungsteil in die erste oder die zweite Funktionsstellung überführt wird. Dementsprechend sind das zweite Kupplungsteil sowie der erste Linearanschlag und der zweite Linearanschlag derart aufeinander abgestimmt, dass in einem eingebauten Zustand des Rotors im Stator, der auch als Betriebszustand für die Motorspindel bezeichnet werden kann, auch unter Berücksichtigung sämtlicher Toleranzen und Längenausdehnungen der einzelnen Komponenten eine Anlage des zweiten Kupplungsteils sowohl am ersten Linearanschlag als auch am zweiten Linearanschlag ausgeschlossen ist.

Bei einer vorteilhaften Weiterbildung der Erfindung ist vorgesehen, dass die zweite Kupplungsaufnahme eine relativbeweglich, insbesondere linearbeweglich, längs der Statorachse verlagerbare Riegelführung aufweist, die mit Führungsausnehmungen versehen ist, in denen die Riegel quer zur Statorachse beweglich aufgenommen sind, wobei die Riegelführung an einer Führungshülse beweglich gelagert ist, die mit einer Steuerfläche versehen ist, die derart für eine Bewegungssteuerung der Riegel ausgebildet ist, dass eine Relativbewegung der Riegelführung relativ zur Führungshülse eine Verlagerung der Riegel in radialer Richtung bewirkt. Die Aufgabe der Riegelführung besteht somit zum einen darin, eine Synchronisierung für Relativbewegungen der einzelnen Riegel zu gewährleisten, wobei die Riegel zu diesem Zweck in den Führungsausnehmungen der Riegelführung aufgenommen sind. Dabei sind die Führungsausnehmungen derart bemessen, dass die Riegel bei einer Relativbewegung der Riegelführung längs der Statorachse zumindest nahezu spielfrei und damit synchronisiert zur Relativbewegung der Riegelführung bewegt werden. Eine radiale Positionierung der Riegel erfolgt nicht durch die Führungsausnehmung sondern vielmehr durch eine Steuerfläche, an der die Riegel vorzugsweise mit einem radial außen liegenden Endbereich anliegen, wobei diese Steuerfläche an einer Führungshülse ausgebildet ist. Da die Riegelführung relativbeweglich, insbesondere linearbeweglich, an der Führungshülse aufgenommen ist, kommt es bei einer Verlagerung der Riegelführung gegenüber der Führungshülse zu einer Abwälzbewegung oder Gleitbewegung der Riegel an der Steuerfläche, wodurch eine radiale Position der Riegel verändert werden kann.

Vorteilhaft ist es, wenn die Führungshülse einen kreisringförmigen, in axialer Richtung einseitig offenen Ringraum aufweist und wenn der Riegelführung ein Ringkolben zugeordnet ist, der axialbeweglich abdichtend im Ringraum aufgenommen ist, so dass der Ringraum und der Ringkolben einen größenvariablen Arbeitsraum begrenzen, um einen Fluidaktor zur axialen Verlagerung der Riegelführung und zur Betätigung der Riegel zu bilden. Der Ringraum kann auch als umlaufende Nut in der Führungshülse beschrieben werden, die eine radial innenliegende erste Innenwand, eine radial außen liegende und der ersten Innenwand gegenüberliegende zweite Innenwand sowie einen in axialer Richtung ausgerichteten, kreisringförmig ausgebildeten Bodenbereich aufweist und wobei eine in axialer Richtung gerichtete Öffnung der Ringnut von einem kreisringförmig ausgebildeten, beispielsweise mit quadratischem oder rechteckigen Querschnitt verwirklichten Ringkolben verschlossen wird. Dieser Ringkolben bildet somit mit dem Ringraum einem größenvariablen Fluid-Arbeitsraum, der mit einem druckbeaufschlagtem Fluid, insbesondere Druckluft oder Hydrauliköl, beaufschlagt werden kann. Hierdurch kann eine druckabhängige Vergrößerung des Arbeitsraums herbeigeführt werden, die mit einer axialen Relativbewegung des Ringkolbens gegenüber der Führungshülse einhergeht. Im Zuge dieser axialen Relativbewegung des Ringkolbens werden die in den Führungsausnehmungen der Riegelführung aufgenommenen Riegel in Abhängigkeit von der Ausgestaltung der an der Führungshülse ausgebildeten Steuerfläche zumindest in radialer Richtung oder einer überlagerten Relativbewegung sowohl in radialer als auch in axialer Richtung verlagert, um das zweite Kupplungsteil zu verriegeln oder freizugeben.

In weiterer Ausgestaltung der Erfindung ist vorgesehen, dass die Riegelführung zwischen einer Verriegelungsstellung für das zweite Kupplungsteil und einer Entriegelungsstellung für das zweite Kupplungsteil beweglich im Stator gelagert ist und dass die Riegelführung in der Entriegelungsstellung in einen von Innenoberflächen der zweiten Kupplungsaufnahme bestimmten Kupplungsbereich eingreift, der zur Aufnahme des zweiten Kupplungsteils ausgebildet ist, um das zweite Kupplungsteil zu verdrängen. Der Kupplungsbereich kann auch als dasjenige Raumvolumen beschrieben werden, den das zweite Kupplungsteil einnimmt, wenn der Rotor im Stator aufgenommen ist und ein Betriebszustand für die Motorspindel vorliegt. Insbesondere wird der Kupplungsbereich von Innenoberflächen eines der zweiten Kupplungsaufnahme zugehörigen Abschlussrings und einer der zweiten Kupplungsaufnahme zugehörigen Riegelführung in radialer Richtung nach außen begrenzt.

Die Riegelführung ist derart ausgebildet, dass sie in der Entriegelungsstellung zumindest teilweise in diesen Kupplungsbereich eingreift, so dass bei einer Überführung der Riegelführung aus der Verriegelungsstellung in die Entriegelungsstellung eine Verdrängung des zweiten Kupplungsteils aus dem Kupplungsbereich bewirkt werden kann. Hierdurch wird erreicht, dass das zweite Kupplungsteil zu einem Zeitpunkt, zu dem eine Verriegelung durch die Riegel bereits aufgehoben ist, möglicherweise aber noch eine Haftreibung zwischen dem zweiten Kupplungsteil und der zweiten Kupplungsaufnahme vorliegt, durch die Relativbewegung der Riegelführung längs der Statorachse um einen gewissen Betrag in axialer Richtung verlagert wird, um hiermit die Haftverbindung zwischen dem zweiten Kupplungsteil und der zweiten Kupplungsaufnahme zu lösen. Für diesen Lösevorgang wird insbesondere die vom Fluidaktor, der aus dem Ringraum in der Führungshülse und dem Ringkolben der Riegelführung gebildet ist, bereitzustellende Axialkraft eingesetzt.

Bei einer vorteilhaften Weiterbildung der Erfindung ist vorgesehen, dass der Riegelführung wenigstens eine Feder zugeordnet ist, die für eine Bereitstellung einer in Richtung der Verriegelungsstellung auf die Riegelführung wirkenden Axialkraft ausgebildet ist. Mit einer Feder oder einer Anordnung mehrerer derartiger Federn, die derart zwischen der Riegelführung und einer am Stator ausgebildeten Stützfläche angeordnet sind, dass sie stets unter einer Vorspannung stehen, kann bewirkt werden, dass die Riegelführung in Abwesenheit einer Druckbeaufschlagung des Fluidaktors in einer Vorzugsstellung gehalten werden, die identisch mit der Verriegelungsstellung für die Riegelführung ist. Dementsprechend kann die mit den Federn vorgespannte Riegelführung auch als normal verriegelt oder normal geschlossen bezeichnet werden. Eine Aufhebung dieser Verriegelung erfolgt dann durch die Druckbeaufschlagung des Fluidaktors, der derart dimensioniert ist und mit druckbeaufschlagtem Fluid versorgt werden kann, dass er die Vorspannkraft der Feder sowie die zur axialen Verlagerung der Riegelführung notwendige Deformationsenergie für die Feder bereitstellt.

Zweckmäßig ist es, wenn die Wälzkörper des zweiten Drehlagers als parallel zur Rotorachse ausgerichtete Zylinderrollen ausgebildet sind und wenn der Innenring des zweiten Drehlagers mit einer umlaufenden Ringnut versehen ist, deren Seitenwände für eine axiale Führung der Zylinderrollen ausgebildet sind und wenn der Außenring des zweiten Drehlagers eine kreiszylindrisch ausgebildete Innenoberfläche aufweist, an der die Zylinderrollen anliegen. Ein derartiges Drehlager wird auch als Zylinderrollenlager mit bordlosem Außenring bezeichnet und ermöglicht eine hoch belastbare Drehlagerung für das zweite Kupplungsteil gegenüber der Rotorwelle als axiales Loslager. Um ein unerwünschtes Auseinanderfallen dieses Zylinderrollenlagers zu verhindern ist der Außenring des zweiten Drehlagers im zweiten Kupplungsteil aufgenommen, das zwar längs der Rotorachse zwischen der ersten Funktionsstellung und der zweiten Funktionsstellung verlagert werden kann, jedoch durch die jeweiligen ersten und zweiten Linearanschläge derart in seiner axialen Auslenkung begrenzt wird, dass ein Entfernen der Wälzkörper aus dem Lagerspalt zwischen Innenring und Außenring verhindert wird.

Vorteilhaft ist es, wenn die Außenoberfläche des zweiten Kupplungsteils zusammen mit der Riegelausnehmung eine Verdrängungsfläche für den Riegel bildet, die für eine radial nach außen gerichtete Verlagerung des Riegels bei einer axialen Verlagerung der Riegelführung aus der Verriegelungsstellung in die Entriegelungsstellung ausgebildet ist. Diese Verdrängungsfläche ist vorzugsweise derart auf den Riegel und die an der Führungshülse ausgebildete Steuerfläche angepasst, dass sich für den Riegel eine Zwangsführung ergibt, bei der zu jeder axialen Stellung der Riegelführung gegenüber der Führungshülse eine zumindest im Wesentlichen vorhersehbare radiale und axiale Positionierung des jeweiligen Riegels sichergestellt ist. Beispielhaft ist vorgesehen, dass die von der Riegelausnehmung begrenzte Schrägfläche in eine kreiszylindrische Außenoberfläche des zweiten Kupplungsteils übergeht, womit bei einer axialen Verlagerung des zweiten Kupplungsteils relativ zum Riegel die gewünschte Zwangsverlagerung des Riegels in radialer Richtung nach außen aufgrund der Geometrie der Schrägfläche und anschließend eine Sicherstellung der radial außen liegenden Position des Riegels durch die kreiszylindrische Außenumfangsfläche des zweiten Kupplungsteils gewährleistet wird.

Vorteilhaft ist es, wenn der mit dem ersten Magnetsystem ausgerüstete Stator und der mit dem zweiten Magnetsystem ausgerüstete Rotor einen Elektromotor aus der Gruppe: Synchronmotor, Asynchronmotor bilden, wobei das erste Magnetsystem und das zweite Magnetsystem jeweils wenigstens eine Komponente aus der Gruppe: Magnetspule, Kurzschlussspule, Permanentmagnet, umfassen.

Eine vorteilhafte Ausführungsform der Erfindung ist in der Zeichnung dargestellt. Hierbei zeigt:
- Figur 1: eine perspektivische Übersichtsdarstellung einer Motorspindel,
- Figur 2: eine Schnittdarstellung der Motorspindel gemäß der Figur 1 mit schematisch eingezeichneten Funktionsbereichen,
- Figur 3: eine Schnittdarstellung des Stators der Motorspindel gemäß den Figuren 1 und 2,
- Figur 4: eine Schnittdarstellung des Rotors für die Motorspindel gemäß den Figuren 1 und 2,
- Figur 5: eine Ausschnittdarstellung der zweiten Kupplungsaufnahme in einer Verriegelungsstellung für das zweite Kupplungsteil des Rotors,
- Figur 6: die Ausschnittdarstellung gemäß der Figur 5 für eine Entriegelungsstellung des in der zweiten Kupplungsaufnahme aufgenommenen zweiten Kupplungsteils, und
- Figur 7: die Ausschnittdarstellung gemäß der Figur 5 für einen für eine Freigabestellung des in der zweiten Kupplungsaufnahme aufgenommenen zweiten Kupplungsteils.

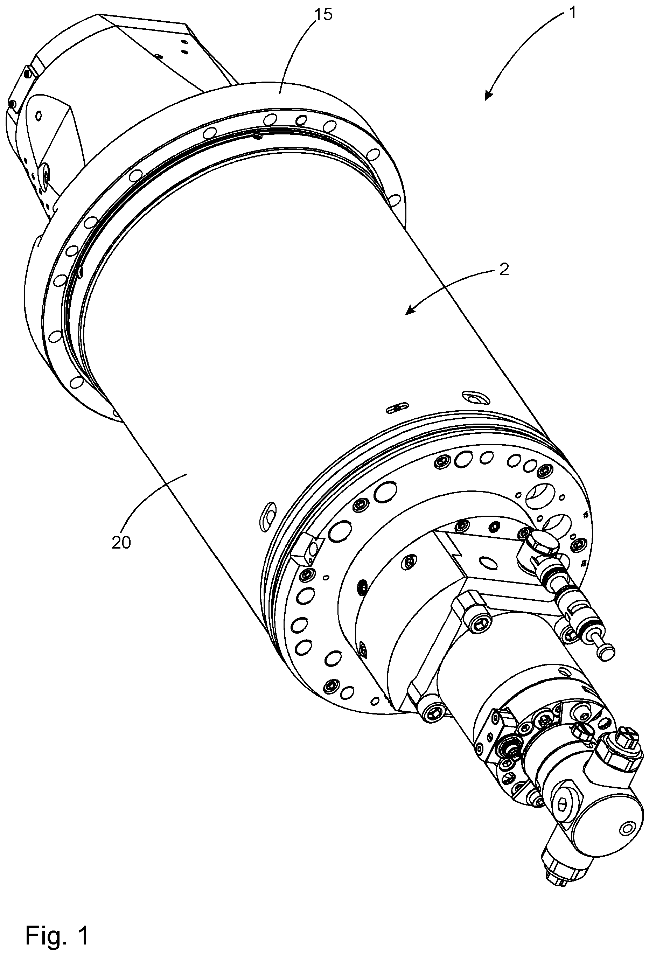

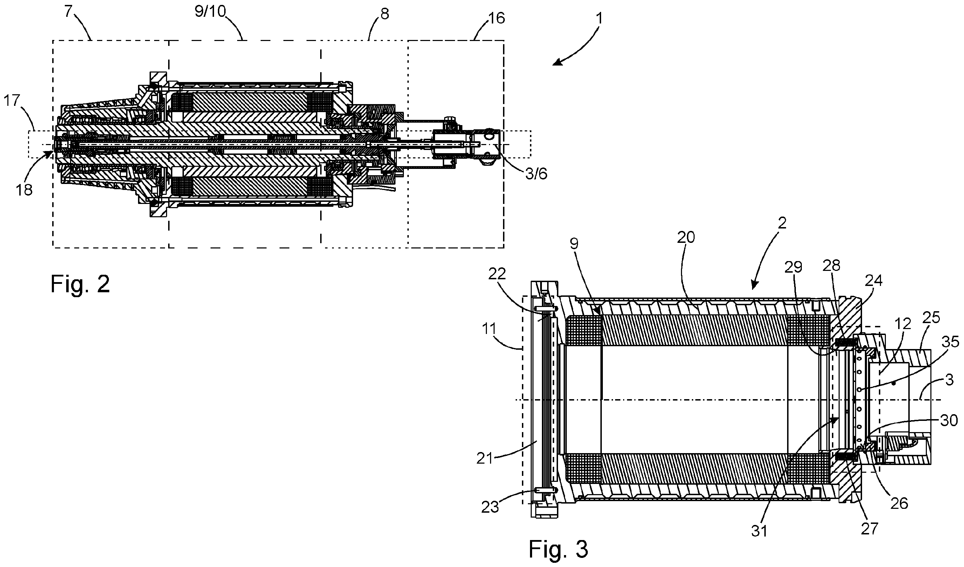

Eine in den Figuren 1 und 2 gezeigte Motorspindel 1 ist zur Verwendung in einem Bearbeitungszentrum vorgesehen und dient zur Einspannung sowie zum rotatorischen Antrieb eines nicht dargestellten Schneidwerkzeugs wie beispielsweise eines Fräsers. Für eine Ankopplung an eine nicht gezeigte Motorspindelaufnahme des ebenfalls nicht gezeigten Bearbeitungszentrums weist die Motorspindel einen Befestigungsring 15 auf, mit dem die Motorspindel 1 mit einer hohen Präzision und Wiederholgenauigkeit in der Motorspindelaufnahme befestigt werden kann.

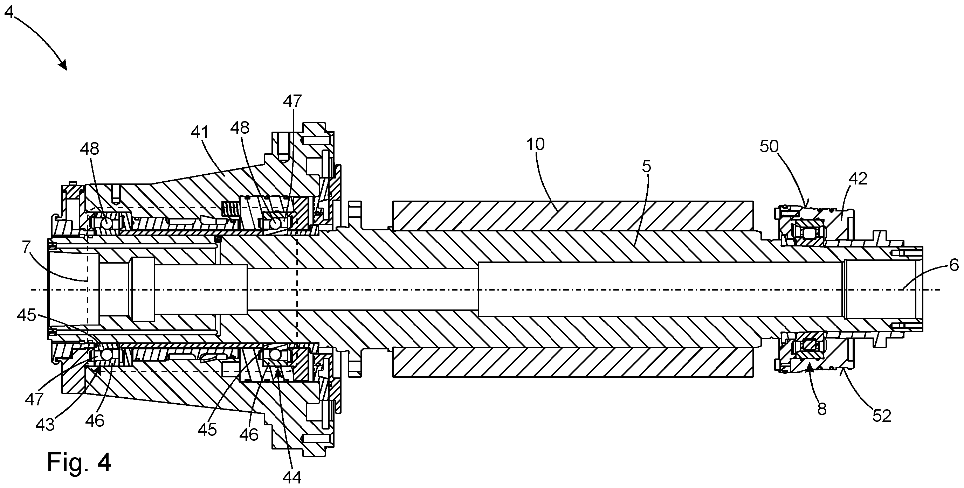

Die Motorspindel 1 umfasst einen hülsenförmig ausgebildeten Stator 2, wobei die im Wesentlichen kreiszylindrische Geometrie des Stators 2 eine Statorachse 3 bestimmt. In dem Stator 2 ist ein in der Figur 4 näher dargestellter Rotor 4 drehbeweglich aufgenommen, der eine Rotorwelle 5 umfasst, die im Wesentlichen rohrförmig ausgebildet ist und längs einer Rotorachse 6 erstreckt ist. In einem Betriebszustand, wie er in der Figur 2 dargestellt ist, ist der Rotor 4 derart im Stator 2 drehbeweglich aufgenommen, dass die Rotorachse 6 identisch mit der Statorachse 3 ist.

Die Darstellung der Figur 2 dient lediglich als schematische Übersicht, in der insgesamt fünf unterschiedliche Funktionsbereiche der Motorspindel 1 mit unterschiedlich gestrichelten Kästen symbolisch umrahmt eingezeichnet sind.

Der erste Funktionsbereich wird im Wesentlichen durch das erste Drehlager 7 bestimmt, bei dem es sich um ein axiales Festlager handelt.

Der zweite Funktionsbereich umfasst das dem Stator 2 zugeordnete erste Magnetsystem 9 sowie das dem Rotor 4 zugeordnete zweite Magnetsystem 10 und bildet somit das elektromotorische Kernstück der Motorspindel 1, da in diesem Funktionsbereich durch magnetische Wechselwirkung zwischen dem ersten Magnetsystem 9 und dem zweiten Magnetsystem 10 eine Bereitstellung eines Drehmoments auf die Rotorwelle 5 bewirkt wird.

Der dritte Funktionsbereich umfasst das zweite Drehlager 8 und wird nachstehend im Zusammenhang mit den Figuren 4 bis 7 näher beschreiben.

Der vierte Funktionsbereich umfasst einen Aktor 16, der zur Bereitstellung einer längs der Rotorachse 6 ausgerichteten Linearbewegung ausgebildet ist, die auf eine im fünften Funktionsbereich angeordnete Spanneinrichtung 17 eingeleitet wird. Die Aufgabe der Spanneinrichtung 17 besteht darin, ein nicht näher dargestelltes Schneidwerkzeug, beispielsweise einen Fräser oder einem Bohrer, in einer Spannzange 18 aufzunehmen, die in der Rotorwelle 5 im ersten Funktionsbereich angeordnet ist.

Dementsprechend kann mit der Motorspindel 1 durch Bereitstellung von elektrischer Energie an das erste Magnetsystem 9 und/oder das zweite Magnetsystem 10 eine Einleitung einer rotatorischen Relativbewegung des Rotors 4 gegenüber dem Stator 2 bewirkt werden, wobei diese Rotationsbewegung auf ein nicht dargestelltes, in der Spannzange 18 aufgenommenes Schneidwerkzeug übertragen werden kann, mit dessen Hilfe dann beispielsweise ein Trennvorgang, insbesondere ein Fräsvorgang oder ein Bohrvorgang, vorgenommen werden kann.

Der in der Figur 3 näher gezeigte Stator 2 umfasst ein rein exemplarisch rotationssymmetrisch zur Statorachse 3 ausgebildetes, rohrförmiges Statorgehäuse 20, das an einem ersten Endbereich mit einer ersten Kupplungsaufnahme 11 und an einem zweiten Endbereich, der dem ersten Endbereich abgewandt ist, mit einer zweiten Kupplungsaufnahme 12 ausgerüstet ist. Rein exemplarisch ist die erste Kupplungsaufnahme 11 als Stufenbohrung 21 mit mehreren, jeweils kreiszylindrisch ausgebildete Bohrungsabschnitten verwirklicht. An einer axial ausgerichteten Stirnfläche 22 der Stufenbohrung 21 sind rein exemplarisch zwei Paßstifte 23 angeordnet, die parallel zur Statorachse 3 ausgerichtet sind und die für eine drehfeste und zentrierte Aufnahme des nachstehend in Zusammenhang mit der Figur 4 näher beschriebenen ersten Kupplungsteils 41 des Rotors 4 vorgesehen sind.

Die an einem zweiten Endbereich des Statorgehäuses 20 vorgesehene zweite Kupplungsaufnahme 12 umfasst einen in nicht näher dargestellter Weise mit dem Statorgehäuse 20 ortsfest verbundenen Abschlussring 24, an dem eine Führungshülse 25 festgelegt ist. In der Führungshülse 25 ist eine Riegelführung 26 linearbeweglich aufgenommen, die von Druckfedern 27 in einer nachstehend näher erläuterten Verriegelungsstellung gehalten wird. Hierzu sind die Druckfedern 27 in stirnseitig in den Abschlussring 24 eingebrachten Bohrungen 28 aufgenommen.

Der in der Figur 4 näher dargestellte Rotor 4 umfasst das als axiales Festlager ausgebildete erste Drehlager 7 sowie das als axiales Loslager ausgebildete zweite Drehlager 8. Hierbei ist dem ersten Drehlager 7 das erste Kupplungsteil 41 zugeordnet, das für eine Montage in die erste Kupplungsaufnahme 11 vorgesehen ist. Das zweite Drehlager 8 umfasst ein zweites Kupplungsteil 42, das für eine Montage in die zweite Kupplungsaufnahme 12 des Stators 2 vorgesehen ist.

Zwischen dem ersten Kupplungsteil 41 und der Rotorwelle 5 ist das erste Drehlager 7 vorgesehen, um eine reibungsarme Rotationsbewegung der Rotorwelle 5 gegenüber dem ersten Kupplungsteil 41 zu ermöglichen. Rein exemplarisch umfasst das erste Drehlager 7 ein erstes Schrägkugellager 43 sowie ein zweites Schrägkugellager 44. Beide Schrägkugellager 43, 44 weisen jeweils einen an der Rotorwelle 5 festgelegten Innenring 45 sowie einen am ersten Kupplungsteil 41 festgelegten Außenring 46 auf. In einem Lagerspalt 47 zwischen dem jeweiligen Innenring 45 und dem jeweiligen Außenring 46 sind mehrere, rein exemplarisch kugelförmig ausgebildete Wälzkörper 48 angeordnet. Die übrigen dem ersten Kupplungsteil aufgenommenen Komponenten dienen im Wesentlichen zur Verspannung der jeweiligen Innenring 45 bzw. Außenringe 46 sowie zur Gewährleistung einer Abdichtung für die beiden Schrägkugellager 43 und 44 und werden nachstehend nicht näher beschrieben.

An einem dem ersten Drehlager 7 abgewandten Endbereich der Rotorwelle 5 ist das zweite Drehlager 8 angeordnet, das als axiales Loslager ausgeführt ist, um eine statische Unbestimmtheit bzw. statische Überbestimmung für die Lagerung des Rotors 4 am Stator 2 zu vermeiden. Ferner ist zwischen dem ersten Drehlager 7 und dem zweiten Drehlager 8 das zweite Magnetsystem 10 auf der Rotorwelle 5 angeordnet, bei dem es sich beispielsweise um eine nicht näher dargestellte Kurzschlussspule handeln kann.

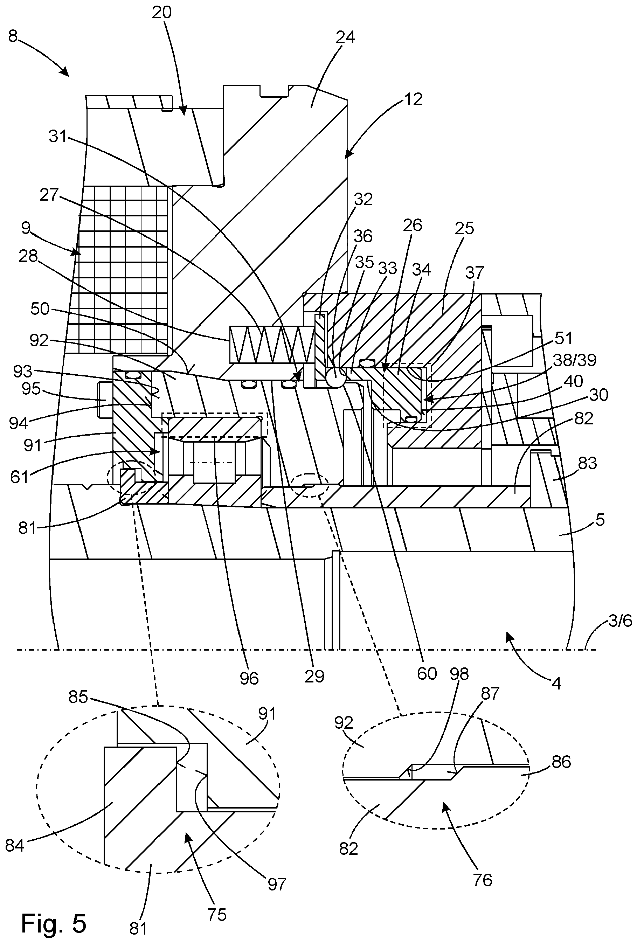

Wie aus den Darstellungen der Figuren 5 bis 7 entnommen werden kann, umfasst das zweite Drehlager 8 rein exemplarisch ein Zylinderrollenlager 61, mit dessen Hilfe die Rotorwelle 5 drehbeweglich gegenüber dem zweiten Kupplungsteil 42 gelagert ist.

Das Zylinderrollenlager 61 umfasst einen Innenring 62, der mit einer inneren Umfangsfläche 70 an einer Außenumfangsfläche 80 der Rotorwelle anliegt und der von einem an der Rotorwelle 5 abgestützten Stützring 81, einer Druckhülse 82 und einem mit der Rotorwelle 5 verschraubten Schraubring 83 ortsfest an der Rotorwelle 5 festgelegt ist. Ein Außenring 63 des Zylinderrollenlagers 61 ist koaxial zum Innenring 62 und zur Rotorachse 6 angeordnet und in dem rein exemplarisch zweiteilig ausgebildeten zweiten Kupplungsteil 42 festgelegt.

Beispielhaft umfasst das zweite Kupplungsteil 42 ein erstes Ringteil 91 und ein zweites Ringteil 92, wobei das erste Ringteil 91 mit einer axialen Stirnfläche 93 an einer axialen Stirnfläche 94 des zweiten Ringteils 92 anliegt und mittels mehrerer axial ausgerichteter Befestigungsschrauben 95 mit dem zweiten Ringteil 92 verbunden ist. Die jeweils als rotationssymmetrisch zur Rotorachse 6 ausgebildeten ersten und zweiten Ringteile 91, 92 begrenzen eine in radialer Richtung nach innen offene umlaufende Ringnut 96, in der der Außenring 63 aufgenommen ist. Beispielhaft sind die Geometrie in des ersten Ringteils 91, des zweiten Ringteils 92 sowie des Au-βenring 63 derart aufeinander abgestimmt, dass der Außenring 63 sowohl in axialer Richtung als auch in radialer Richtung formschlüssig in der Ringnut 96 aufgenommen ist.

Zwischen dem Innenring 62 und dem Außenring 63 ist ein Lagerspalt 74 ausgebildet, der in radialer Richtung nach innen von einer Nutfläche 71 einer im Innenring 62 ausgebildeten, in radialer Richtung nach außen offenen Nut 64 und in radialer Richtung nach außen von einer Innenumfangsfläche 72 des Au-βenrings 63 bestimmt wird. In diesem Lagerspalt 74 sind mehrere als Zylinderrollen ausgebildete Wälzkörper 65 angeordnet, die bei einer rotatorischen Relativbewegung des Außenring 63 gegenüber dem Innenring 62 jeweils Abwälzbewegungen gegenüber der Nutfläche 71 und gegenüber der Innenumfangsfläche 72 des Außenrings 63 durchführen.

Ferner ist vorgesehen, dass die inneren Umfangsfläche 72 des Außenrings 63 kreiszylindrisch ausgebildet ist, so dass eine axiale Verlagerung des Außenrings 63 gegenüber dem Wälzkörper 65 ermöglicht ist. Eine axiale Relativbewegung des Außenrings 63 gegenüber dem Innenring 62 wird durch einen ersten Linearanschlag 75, der zwischen dem ersten Ringteil 91 und dem Stützring 81 ausgebildet ist, sowie durch einen zweiten Linearanschlag 76 begrenzt, der zwischen den zweiten Ringteil 92 und der Druckhülse 82 ausgebildet ist.

Beispielhaft ist vorgesehen, dass der Stützring 81 in der Schnittdarstellung gemäß der Figuren 5 bis 7 eine L-förmige Profilierung aufweist, wobei durch diese Profilierung ein radial nach außen abragender Ringbund 84 eine gegenüberliegend zum ersten Ringteil 91 angeordnete und in axialer Richtung ausgerichtete Anschlagfläche bereitstellt, an der eine entgegengesetzt ausgerichtete Axialstirnfläche 97 in einer nicht dargestellten ersten Funktionsstellung des zweiten Kupplungsteils 42 in Anlage kommen kann und wodurch der erste Linearanschlag 75 gebildet wird.

In ähnlicher Weise ist die Druckhülse 82 mit einem umlaufenden Ringbund 86 versehen, dessen in Richtung des Zylinderrollenlagers 61 ausgebildete Anschlagfläche 87 gegenüberliegend zu einer entgegengesetzt ausgerichteten Axialstirnfläche 98 des zweiten Ringteils 92 angeordnet ist, um den zweiten Linearanschlag 76 zu bilden. Dementsprechend ist ein Verstellweg 14 für das zweite Kupplungsteil 42 längs der Rotorachse 6 durch den ersten Linearanschlag 75 und dem zweiten Linearanschlag 76 begrenzt.

Die nicht näher bezeichneten Außendurchmesser des Stützrings 81 sowie der Druckhülse 82 sind derart auf die nicht bezeichneten Innendurchmesser des ersten Ringteils 91 und des zweiten Ringteils 92 abgestimmt, dass zwischen den jeweils sich gegenüberliegenden Komponenten stets ein in radialer Richtung erstreckter Luftspalt vorliegt, so dass während einer Rotation der Rotorwelle 5 um die Rotorachse 6 keine Berührung zwischen dem Stützring 81 und dem ersten Ringteil 91 oder zwischen der Druckhülse 82 und dem zweiten Ringteil 92 vorliegt.

Wie aus der Darstellung der Figuren 5 bis 7 weiter entnommen werden kann, weist das zweite Kupplungsteil 42 eine zumindest bereichsweise konusabschnittsförmig ausgebildete Außenoberfläche 50 auf, die geometrisch ähnlich, insbesondere identisch, zu einer konusabschnittsförmigen Innenoberfläche 29 des Abschlussrings 24 ausgebildet ist. Ferner ist vorgesehen, dass die Innenoberfläche 29 des Abschlussrings 24 zusammen mit einer Innenoberfläche 30 der Riegelführung 26 sowie mit dem Stützring 81 und der Druckhülse 82 einen Kupplungsbereich 31 begrenzt, der in seiner Größe durch eine nachstehend näher beschriebene axiale Verlagerung der Riegelführung 26 ausgehend von der Darstellung der Figur 5 verkleinert werden kann.

Beispielhaft umfasst die Riegelführung 26 einen kreisringförmig ausgebildeten Stützring 32, an den sich in axialer Richtung längs der Statorachse 3 eine kreisringzylindrisch ausgebildete Riegelhülse 33 anschließt, die ihrerseits mit einem Ringkolben 34 verbunden ist. Grundsätzlich handelt es sich bei der Riegelführung 26 um ein zur Statorachse 3 rotationssymmetrisch ausgebildetes Bauteil, lediglich die in die Riegelhülse 33 eingebrachten und in radialer Richtung nach außen weisenden Bohrungen 35, die zur Aufnahme der als Riegel dienenden Riegelkugeln 36 vorgesehen sind, stellen eine Abweichung von der rotationssymmetrischen Geometrie der Riegelführung 26 dar.

Beispielhaft ist vorgesehen, dass der Ringkolben 34 in einer rotationssymmetrisch zur Rotorachse 3 ausgebildeten Axialnut 37 der Führungshülse 25 linearbeweglich und abdichtend aufgenommen ist und somit einen von der Axialnut 37 begrenzten Ringraum 38 als größenvariablen Arbeitsraum 39 nutzbar macht. Hierbei ist die Größe des Arbeitsraums 39 abhängig von einer axialen Position der Riegelführung 26 gegenüber der Führungshülse 25.

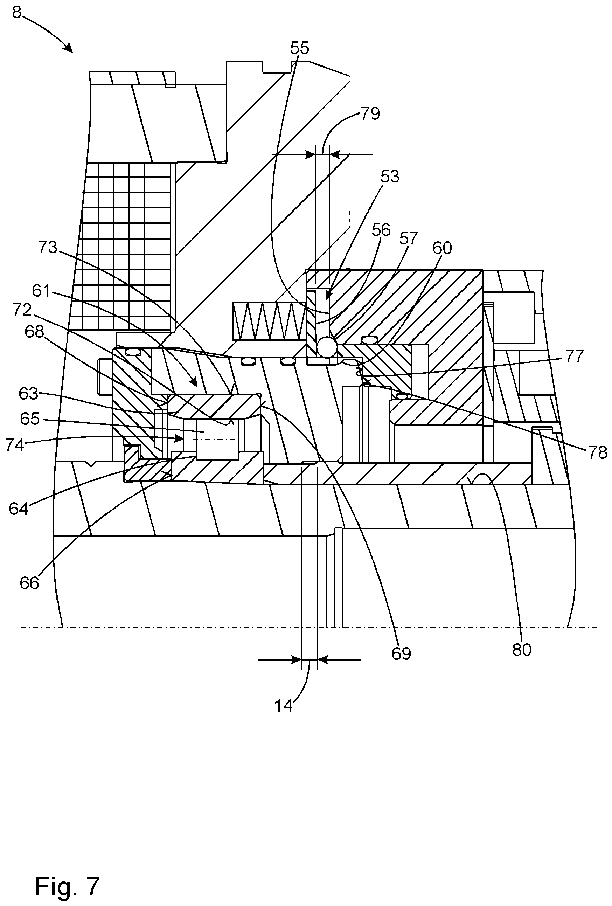

Wie den Darstellungen der Figuren 5 bis 7 weiterhin entnommen werden kann, erfolgt bei einer Druckbeaufschlagung des Arbeitsraums 39 und der daraus resultierenden Krafteinwirkung auf eine Axialstirnfläche 40 des Ringkolbens 34 eine axiale Verlagerung der Riegelführung 26 aus der Verriegelungsstellung gemäß der Figur 5 in eine Entriegelungsstellung gemäß der Figur 7. Im Zuge dieser Verlagerungsbewegung für die Riegelführung 26 zwischen der Verriegelungsstellung und der Entriegelungsstellung wird zum einen eine Kompression und dabei eine elastische Deformation der Druckfedern 27 bewirkt. Zum anderen werden die Riegelkugeln 36 längs der Statorachse 3 axial verlagert, womit ein Entriegelungsvorgang zwischen den Riegelkugeln 36 und dem zweiten Kupplungsteil 42 bewirkt wird, wie nachstehend näher beschrieben wird.

Aus der Figur 5 geht hervor, das die exemplarisch gezeigte Riegelkugel 36 in der Verriegelungsstellung formschlüssig zwischen einer kreiszylindrisch ausgebildeten Innenoberfläche 51 der Führungshülse 25, der zugehörigen Bohrung 35 in der Riegelhülse 33 der Riegelführung 26 und einer in die Außenoberfläche 50 des zweiten Kupplungsteils 42 eingebrachten Riegelausnehmung 52 aufgenommen ist. Hierdurch wird eine zuverlässige Verriegelung des zweiten Kupplungsteils 42 im Stator 2 gewährleistet. In dieser Verriegelungsstellung liegen ein erster Abstand 58 zwischen dem ersten Ringteil 91 und der gegenüberliegend angeordneten ersten Axialfläche 66 des Innenrings 62 sowie ein zweiter Abstand 59 zwischen dem zweiten Ringteil 92 und der gegenüberliegend angeordneten zweiten Axialfläche 67 des Innenrings 62 vor.

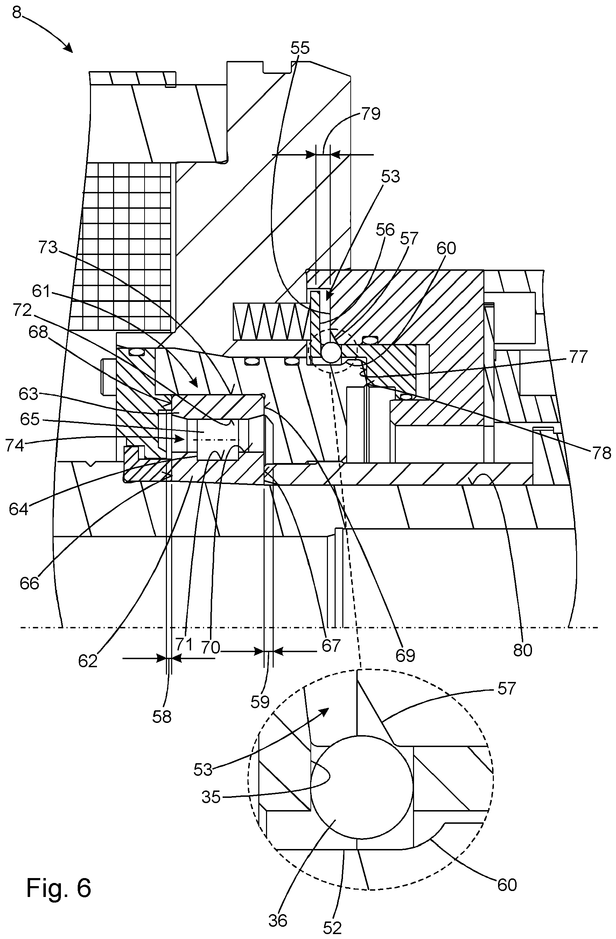

Bei einer Druckbeaufschlagung des Arbeitsraums 39 wird der in axialer Richtung abdichtend und gleitbeweglich in der Führungshülse 25 aufgenommene Ringkolben 34 der Riegelführung 26 bei gleichzeitiger Kompression der Druckfeder 27 in Richtung des ersten Drehlagers 7 verlagert, wie es in der Figur 6 dargestellt ist. Hierbei eröffnet sich zwischen dem Stützring 32 und der Führungshülse 25 ein in radialer Richtung nach außen weisender Ausweichspalt 53 zwischen einer Axialfläche 55 der Führungshülse 25 und einer gegenüberliegend angeordneten Axialfläche 56 des Stützrings 32. Um eine frühzeitige Ausweichbewegung der Riegelkugel 36 in radialer Richtung nach außen zu ermöglichen, noch bevor diese in den Ausweichspalt 53 ausweichen kann, ist ein Übergangsbereich zwischen der kreiszylindrisch ausgebildeten Innenoberfläche 51 der Führungshülse 25 und der Axialfläche 55 mit einer rein exemplarisch kegelabschnittsförmig ausgebildeten Fase 57 versehen. Diese auch als Steuerfläche bezeichnete Fase 57 ermöglicht bereits vor einer vollständigen Öffnung des Ausweichspalts 53 eine radiale Verlagerung der Riegelkugel 36 nach außen.

Weiterhin wird die Verlagerung der Riegelkugel 36 in den Ausweichspalt durch die Geometrie der Riegelausnehmung 52 unterstützt, die rein exemplarisch als radial nach innen eingestochene Nut in die Außenoberfläche 50 des zweiten Kupplungsteils 42 eingebracht ist und die eine an die Geometrie der Riegelkugel 36 angepasste Nutwand 60 aufweist. Beispielhaft ist die Nutwand 60 mit einer viertelkreisförmigen Profilierung ausgebildet und ermöglicht damit einerseits eine flächige Anlage der Riegelkugel 36 in der Verriegelungsstellung und andererseits eine Verdrängung der Riegelkugel 36 bei der axialen Relativbewegung der Riegelführung 26 gegenüber der Führungshülse 25.

Durch diese Verdrängung der Riegelkugel 36 wird die Verriegelung mit dem zweiten Kupplungsteil 42 aufgehoben, so dass bei Aufbringen einer gemäß der Darstellung der Figur 6 nach links gerichteten Zugkraft auf den Rotor 4 eine Entnahme des Rotors 4 aus dem Stator 2 ermöglicht wird.

Typischerweise ist jedoch davon auszugehen, dass durch die im Verriegelungszustand von den Riegelkugeln 36 auf das zweite Kupplungsteil 42, insbesondere im Bereich der Nutwand 60, übertragenen Kräfte, die zu Kraftkomponenten sowohl in axialer Richtung als auch in radialer Richtung führen, eine erhebliche Haftreibung zwischen der Außenoberfläche 50 des zweiten Kupplungsteils 42 und der Innenoberfläche 29 des Abschlussrings 24 hervorrufen. Diese Haftreibung wird zusätzlich durch Einflüsse wie Verschmutzung und/oder Passungsrost erhöht, so dass ein einfaches manuelles Entnehmen des Rotors 4 aus dem Stator 2 nicht zu erwarten ist. Um die Demontage des Rotors 4 aus dem Stator 2 zu erleichtern ist daher vorgesehen, dass die Riegelführung 26, die zusammen mit der Führungshülse 25 einen Fluidaktor bildet, mit einer rein exemplarisch am Ringkolben 34 ausgebildeten Stirnfläche 77 in Anlage an eine Stirnfläche 78 des zweiten Kupplungsteils 42 gelangt, bevor ein maximaler Stellweg 79 der Riegelführung 26 erreicht ist. Dementsprechend kommt es bei einer Anlage der Stirnfläche 77 des Ringkolbens 34 an die Stirnfläche 78 des zweiten Kupplungsteils 42 zu einer Krafteinleitung von der Riegelführung 26 auf das zweite Kupplungsteil 42, wodurch dieses aus der Verriegelungsstellung in die Entriegelungsstellung verlagert werden kann, wie dies in der Figur 7 gezeigt ist.

Dadurch erfolgt eine axiale Verlagerung des zweiten Kupplungsteils 42 sowie des darin aufgenommenen Außenrings 63 relativ zum Innenring 62 mit den darin aufgenommenen Wälzkörpern 65, wobei das zweite Kupplungsteil 42 durch den ersten Linearanschlag 75 und dem zweiten Linearanschlag 76 in seiner Relativbeweglichkeit gegenüber der Rotorwelle 5 in einer Weise begrenzt ist, dass stets die Führungswirkung für die Wälzkörper 65 durch den Außenring 63 gewährleistet bleibt. Ferner sind das erste Ringteil 91 sowie das zweite Ringteil 92 derart auf den Innenring 62 des Zylinderrollenlagers 61 abgestimmt, dass entlang des gesamten Verstellwegs 14 stets der erste Abstand 58 und der zweite Abstand 59 nicht gegen Null gehen oder verschwinden, womit auch eine unproblematische Handhabung des Rotors 4 im ausgebauten Zustand außerhalb des Stators 2 gewährleistet ist.

## Patentansprüche

1. Motorspindel (1) zum Antreiben eines Bearbeitungswerkzeugs, mit einem längs einer Statorachse (3) erstreckten, hülsenförmigen Stator (2), der ein erstes Magnetsystem (9), eine erste Kupplungsaufnahme (11) und eine zweite Kupplungsaufnahme (12) aufweist, und mit einem Rotor (4), der eine längs einer Rotorachse (6) erstreckte Rotorwelle (5), ein zweites Magnetsystem (10), ein erstes Kupplungsteil (41) und ein zweites Kupplungsteil (42) aufweist, wobei das erste Kupplungsteil (41) zur Festlegung an der ersten Kupplungsaufnahme (11) ausgebildet ist und mit einem als axiales Festlager ausgebildeten ersten Drehlager (7) drehbeweglich um die Rotorachse (6) an der Rotorwelle (5) gelagert ist und wobei das zweite Kupplungsteil (42) zur Festlegung an der zweiten Kupplungsaufnahme (12) ausgebildet ist und mit einem als axiales Loslager ausgebildeten zweiten Drehlager (8) drehbeweglich um die Rotorachse (6) an der Rotorwelle (5) gelagert ist, wobei das zweite Drehlager (8) einen auf der Rotorwelle (5) festgelegten Innenring (62) und einen koaxial zum Innenring (62) angeordneten und am zweiten Kupplungsteil (42) festgelegten Außenring (63) umfasst, der mit dem Innenring (62) einen kreisringförmigen Lagerspalt (74) begrenzt, in dem mehrere Wälzkörper (65) aufgenommen sind, wobei das zweite Kupplungsteil (42) parallel zur Rotorachse (6) zwischen einer ersten Funktionsstellung und einer zweiten Funktionsstellung längs eines Verstellwegs (14) axialbeweglich an der Rotorwelle (5) aufgenommen ist, **dadurch gekennzeichnet, dass** für den gesamten Verstellweg (14) zwischen einer ersten Axialfläche (66) des Innenrings (62) und dem zweiten Kupplungsteil (42) ein erster Abstand (58) vorliegt und dass zwischen einer zweiten Axialfläche (67) des Innenrings (62), die der ersten Axialfläche (66) abgewandt ist, und dem zweiten Kupplungsteil (42) ein zweiter Abstand (59) vorliegt.

2. Motorspindel (1) nach Anspruch 1, **dadurch gekennzeichnet, dass** an einer Außenoberfläche (50) des zweiten Kupplungsteils (42) wenigstens eine, insbesondere in radialer Richtung nach innen vertiefte, Riegelausnehmung (52) ausgebildet ist und dass die zweite Kupplungsaufnahme (12) an einer Innenumfangsfläche (29) mit mehreren, insbesondere in einheitlicher Winkelteilung angeordneten, Riegeln (36) versehen ist, wobei die Riegel (36) zwischen einer, insbesondere radial außenliegenden, Freigabestellung und einer, insbesondere radial innenliegenden, Verriegelungsstellung einstellbar und in der Verriegelungsstellung für einen formschlüssigen Eingriff in die Riegelausnehmung (52) ausgebildet sind.

3. Motorspindel (1) nach Anspruch 2, **dadurch gekennzeichnet, dass** die Riegel (36) in der Verriegelungsstellung, insbesondere ausschließlich, an einer Schrägfläche (60) der Riegelausnehmung (52) anliegen, wobei die Schrägfläche (60) in einem spitzen Winkel zur Rotorachse (6) ausgerichtet ist, um eine längs der Rotorachse (6) in Richtung der Verriegelungsstellung ausgerichtete Axialriegelkraft von der zweiten Kupplungsaufnahme (12) auf das zweite Kupplungsteil (42) einzuleiten.

4. Motorspindel (1) nach Anspruch 1, 2 oder 3, **dadurch gekennzeichnet, dass** eine Innenoberfläche (29) der zweiten Kupplungsaufnahme und eine Außenoberfläche (50) des zweiten Kupplungsteils (42) zumindest bereichsweise geometrisch ähnlich, insbesondere jeweils kegelmantelabschnittsförmig, ausgebildet sind, um eine formschlüssige Aufnahme des zweiten Kupplungsteils (42) in der zweiten Kupplungsaufnahme (12) sowohl in radialer Richtung als auch in einer längs der Rotorachse (6) ausgerichteten Verriegelungsrichtung zu gewährleisten.

5. Motorspindel (1) nach einem der Ansprüche 1 bis 4, **dadurch gekennzeichnet, dass** an der Rotorwelle (5) ein erster Linearanschlag (75) ausgebildet ist, an dem das zweite Kupplungsteil (42) in der ersten Funktionsstellung anliegt und dass an der Rotorwelle (5) ein zweiter Linearanschlag (76) ausgebildet ist, an dem das zweite Kupplungsteil (42) in der zweiten Funktionsstellung anliegt.

6. Motorspindel (1) nach einem der vorhergehenden Ansprüche, **dadurch gekennzeichnet, dass** die zweite Kupplungsaufnahme (12) eine relativbeweglich, insbesondere linearbeweglich, längs der Statorachse (3) verlagerbare Riegelführung (26) aufweist, die mit Führungsausnehmungen (35) versehen ist, in denen die Riegel (36) quer zur Statorachse (3) beweglich aufgenommen sind, wobei die Riegelführung (26) an einer Führungshülse (25) beweglich gelagert ist, die mit einer Steuerfläche (57) versehen ist, die derart für eine Bewegungssteuerung der Riegel (36) ausgebildet ist, dass eine Relativbewegung der Riegelführung (26) relativ zur Führungshülse (25) eine Verlagerung der Riegel (36) in radialer Richtung bewirkt.

7. Motorspindel (1) nach Anspruch 6, **dadurch gekennzeichnet, dass** die Führungshülse (25) einen kreisringförmigen, in axialer Richtung einseitig offenen Ringraum (38) aufweist und dass der Riegelführung (26) ein Ringkolben (34) zugeordnet ist, der axialbeweglich abdichtend im Ringraum (38) aufgenommen ist, so dass der Ringraum (38) und der Ringkolben (34) einen größenvariablen Arbeitsraum (39) begrenzen, um einen Fluidaktor zur axialen Verlagerung der Riegelführung (26) und zur Betätigung der Riegel (36) zu bilden.

8. Motorspindel (1) nach Anspruch 7, **dadurch gekennzeichnet, dass** die Riegelführung (26) zwischen einer Verriegelungsstellung für das zweite Kupplungsteil (42) und einer Entriegelungsstellung für das zweite Kupplungsteil (42) beweglich im Stator (2) gelagert ist und dass die Riegelführung (26) in der Entriegelungsstellung in einen von Innenoberflächen (29, 30) der zweiten Kupplungsaufnahme (12) bestimmten Kupplungsbereich (31) eingreift, der zur Aufnahme des zweiten Kupplungsteils (42) ausgebildet ist, um das zweite Kupplungsteil (42) zu verdrängen.

9. Motorspindel (1) nach Anspruch 6, 7 oder 8, **dadurch gekennzeichnet, dass** der Riegelführung (26) wenigstens eine Feder (27) zugeordnet ist, die für eine Bereitstellung einer in Richtung der Verriegelungsstellung auf die Riegelführung (26) wirkenden Axialkraft ausgebildet ist.

10. Motorspindel (1) nach einem der vorhergehenden Ansprüche, **dadurch gekennzeichnet, dass** die Wälzkörper (65) des zweiten Drehlagers (8) als parallel zur Rotorachse (6) ausgerichtete Zylinderrollen ausgebildet sind und dass der Innenring (62) des zweiten Drehlagers (8) mit einer umlaufenden Ringnut (64) versehen ist, deren Seitenwände für eine axiale Führung der Zylinderrollen ausgebildet sind und dass der Außenring (63) des zweiten Drehlagers (8) eine kreiszylindrisch ausgebildete Innenoberfläche (72) aufweist, an der die Zylinderrollen anliegen.

11. Motorspindel (1) nach Anspruch 1, **dadurch gekennzeichnet, dass** die Außenoberfläche (50) des zweiten Kupplungsteils (42) zusammen mit der Riegelausnehmung (52) eine Verdrängungsfläche für den Riegel (36) bildet, die für eine radial nach au-ßen gerichtete Verlagerung des Riegels (36) bei einer axialen Verlagerung der Riegelführung (26) aus der Verriegelungsstellung in die Entriegelungsstellung ausgebildet ist.

12. Motorspindel (1) nach Anspruch 1, **dadurch gekennzeichnet, dass** der mit dem ersten Magnetsystem (9) ausgerüstete Stator (2) und der mit dem zweiten Magnetsystem (10) ausgerüstete Rotor (4) einen Elektromotor aus der Gruppe: Synchronmotor, Asynchronmotor bilden, wobei das erste Magnetsystem (9) und das zweite Magnetsystem (10) jeweils wenigstens eine Komponente aus der Gruppe: Magnetspule, Kurzschlussspule, Permanentmagnet, umfassen.

## Claims

1. Motor spindle (1) for driving a machining tool, comprising a sleeve-shaped stator (2) extending along a stator axis (3), which stator has a first magnet system (9), a first coupling receptacle (11) and a second coupling receptacle (12), and further comprising a rotor (4), which has a rotor shaft (5) extending along a rotor axis (6), a second magnet system (10), a first coupling part (41) and a second coupling part (42), wherein the first coupling part (41) is designed to be fixed to the first coupling receptacle (11) and is mounted on the rotor shaft (5) so as to be rotatable about the rotor axis (6) by means of a first rolling bearing (7) designed as an axial fixed bearing, and wherein the second coupling part (42) is designed to be fixed to the second coupling receptacle (12) and is mounted on the rotor shaft (5) so as to be rotatable about the rotor axis (6) by means of a second rolling bearing (8) designed as an axial loose bearing, wherein the second rolling bearing (8) comprises an inner ring (62) fixed on the rotor shaft (5) and an outer ring (63) arranged coaxially to the inner ring (62) and fixed on the second coupling part (42), which outer ring (63) defines with the inner ring (62) an annular bearing gap (74) in which a plurality of rolling elements (65) are accommodated, the second coupling part (42) being accommodated on the rotor shaft (5) so as to be axially movable parallel to the rotor axis (6) between a first functional position and a second functional position along an adjustment path (14), **characterized in that** a first distance (58) between a first axial surface (66) of the inner ring (62) and the second coupling part (42), and **in that** there is a second distance (59) between a second axial surface (67) of the inner ring (62), which faces away from the first axial surface (66), and the second coupling part (42) are always greater than zero for the entire adjustment path (14).

2. Motor spindle (1) according to claim 1, **characterized in that** at least one latch recess (52) is formed on an outer surface (50) of the second coupling part (42), and wherein the second coupling receptacle (12) is provided on an inner circumferential surface (29) with a plurality of, in particular arranged at a uniform angular pitch, latches (36) being adjustable between a release position, in particular located radially on the outside, and a locking position, in particular located radially on the inside, and being designed for positive engagement in the latch recess (52) in the locking position.

3. Motor spindle (1) according to claim 2, **characterized in that** in the locking position the latches (36) bear, in particular exclusively, against an inclined surface (60) of the latch recess (52), the inclined surface (60) being aligned at an acute angle to the rotor axis (6) in order to introduce an axial latch force, aligned along the rotor axis (6) in the direction of the locking position, from the second coupling receptacle (12) to the second coupling part (42).

4. Motor spindle (1) according to claim 1, 2 or 3, **characterized in that** an inner surface (29) of the second coupling receptacle and an outer surface (50) of the second coupling part (42) are geometrically similar at least in regions, in particular in each case in the shape of a conical shell section, in order to ensure positive reception of the second coupling part (42) in the second coupling receptacle (12) both in the radial direction and in a locking direction aligned along the rotor axis (6).

5. Motor spindle (1) according to one of claims 1 to 4, **characterized in that** a first linear stop (75) is located on the rotor shaft (5), against which the second coupling part (42) bears in the first functional position, and **in that** a second linear stop (76) is located on the rotor shaft (5), against which the second coupling part (42) bears in the second functional position.

6. Motor spindle (1) according to one of the preceding claims, **characterized in that** the second coupling receptacle (12) has a latch guide (26) which can be displaced in a relatively movable manner, in particular in a linearly movable manner, along the stator axis (3) and is provided with guide recesses (35) in which the latches (36) are received in a movable manner transversely with respect to the stator axis (3), wherein the latch guide (26) is movably mounted on a guide sleeve (25) which is provided with a control surface (57) which is designed for movement control of the latches (36) in such a way that a relative movement of the latch guide (26) relative to the guide sleeve (25) causes a displacement of the latches (36) in the radial direction.

7. Motor spindle (1) according to claim 6, **characterized in that** the guide sleeve (25) has a circular annular space (38) which is open on one side in the axial direction, and **in that** the latch guide (26) is assigned an annular piston (34) which is received in the annular space (38) in an axially movable sealing manner, so that the annular space (38) and the annular piston (34) delimit a variable-size working space (39) in order to form a fluid actuator for axial displacement of the latch guide (26) and for actuation of the latches (36).

8. Motor spindle (1) according to claim 7, **characterized in that** the latch guide (26) is movably mounted in the stator (2) between a locking position for the second coupling part (42) and an unlocking position for the second coupling part (42), and **in that** the latch guide (26) in the unlocking position engages in one of inner surfaces (29, 30) of the second coupling receptacle (12), which is designed to receive the second coupling part (42) in order to displace the second coupling part (42).

9. Motor spindle (1) according to claim 6, 7 or 8, **characterized in that** at least one spring (27) is associated with the latch guide (26), which is designed to provide an axial force acting on the latch guide (26) in the direction of the locking position.

10. Motor spindle (1) according to one of the preceding claims, **characterized in that** the rolling bodies (65) of the second rolling bearing (8) are designed as cylindrical rollers aligned parallel to the rotor axis (6), and **in that** the inner ring (62) of the second rolling bearing (8) is provided with a circumferential annular groove (64) whose side walls are designed for axial guidance of the cylindrical rollers, and **in that** the outer ring (63) of the second rolling bearing (8) has a circular-cylindrical inner surface (72) against which the cylindrical rollers bear.

11. Motor spindle (1) according to claim 1, **characterized in that** the outer surface (50) of the second coupling part (42) together with the latch recess (52) forms a displacement surface for the latch (36), which is designed for a radially outwardly directed displacement of the latch (36) during an axial displacement of the latch guide (26) from the locking position into the unlocking position.

12. Motor spindle (1) according to claim 1, **characterized in that** the stator (2) equipped with the first magnet system (9) and the rotor (4) equipped with the second magnet system (10) form an electric motor from the group: synchronous motor, asynchronous motor, wherein the first magnet system (9) and the second magnet system (10) each comprise at least one component from the group: magnet coil, short-circuit coil, permanent magnet.

## Revendications

1. Broche à moteur (1) destinée à entraîner un outil d'usinage, avec un stator (2) en forme de douille, étiré le long d'un axe de stator (3), qui présente un premier système magnétique (9), un premier logement de couplage (11) et un deuxième logement de couplage (12), et avec un rotor (4), qui présente un arbre de rotor (5) étiré le long d'un axe de rotor (6), un deuxième système magnétique (10), une première partie de couplage (41) et une deuxième partie de couplage (42), dans laquelle la première partie de couplage (41) est réalisée pour être fixée sur le premier logement de couplage (11) et est montée sur l'arbre de rotor (5) de manière mobile en rotation autour de l'axe de rotor (6) avec un premier palier rotatif (7) réalisé en tant que palier fixe axial et dans laquelle la deuxième partie de couplage (42) est réalisée pour être fixée sur le deuxième logement de couplage (12) et est montée sur l'arbre de rotor (5) de manière mobile en rotation autour de l'axe de rotor (6) avec un deuxième palier rotatif (8) réalisé en tant que palier lâche axial, dans laquelle le deuxième palier rotatif (8) comprend une bague intérieure (62) fixée sur l'arbre de rotor (5) et une bague extérieure (63) disposée de manière coaxiale par rapport à la bague intérieure (62) et fixée sur la deuxième partie de couplage (42), laquelle délimite avec la bague intérieure (62) une fente de palier (74) de forme annulaire circulaire, dans laquelle sont logés plusieurs corps de roulement (65), dans laquelle la deuxième partie de couplage (42) est logée sur l'arbre de rotor (5) de manière mobile axialement entre une première position fonctionnelle et une deuxième position fonctionnelle le long d'un trajet d'ajustement (14) de manière parallèle à l'axe de rotor (6), **caractérisée en ce qu'**une première distance (58) est présente entre une première face axiale (66) de la bague intérieure (62) et la deuxième partie de couplage (42) pour la totalité du trajet d'ajustement (14), et qu'une deuxième distance (59) est présente entre une deuxième face axiale (67) de la bague intérieure (62), qui est opposée à la première face axiale (66), et la deuxième partie de couplage (42).

2. Broche à moteur (1) selon la revendication 1, **caractérisée en ce qu'**au moins un évidement à verrou (52) renfoncé en particulier vers l'intérieur dans une direction radiale est réalisé sur une surface extérieure (50) de la deuxième partie de couplage (42), et que le deuxième logement de couplage (12) est pourvu de plusieurs verrous (36) disposés en particulier selon une répartition angulaire uniforme sur une face périphérique intérieure (29), dans laquelle les verrous (36) peuvent être réglés entre une position de déverrouillage située en particulier à l'extérieur radialement et une position de verrouillage située en particulier à l'intérieur radialement et sont réalisés, dans la position de verrouillage, pour une prise par complémentarité de forme avec l'évidement à verrou (52).

3. Broche à moteur (1) selon la revendication 2, **caractérisée en ce que** les verrous (36) reposent, dans la position de verrouillage, en particulier exclusivement, sur une face oblique (60) de l'évidement à verrou (52), dans laquelle la face oblique (60) est orientée selon un angle aigu par rapport à l'axe de rotor (6) pour appliquer sur la deuxième partie de couplage (42) une force de verrouillage axial orientée le long de l'axe de rotor (6) en direction de la position de verrouillage depuis le deuxième logement de couplage (12).

4. Broche à moteur (1) selon la revendication 1, 2 ou 3, **caractérisée en ce qu'**une surface intérieure (29) du deuxième logement de couplage et une surface extérieure (50) de la deuxième partie de couplage (42) sont réalisées au moins par endroits de manière similaire sur le plan géométrique, en particulier respectivement en forme de section d'enveloppe conique pour assurer un logement à complémentarité de forme de la deuxième partie de couplage (42) dans le deuxième logement de couplage (12) à la fois dans la direction radiale et dans une direction de verrouillage orientée le long de l'axe de rotor (6).

5. Broche à moteur (1) selon l'une quelconque des revendications 1 à 4, **caractérisée en ce qu'**est réalisée sur l'arbre de rotor (5) une première butée linéaire (75), sur laquelle la deuxième partie de couplage (42) repose dans la première position fonctionnelle, et qu'est réalisée sur l'arbre de rotor (5) une deuxième butée linéaire (76), sur laquelle la deuxième partie de couplage (42) repose dans la deuxième position fonctionnelle.

6. Broche à moteur (1) selon l'une quelconque des revendications précédentes, **caractérisée en ce que** le deuxième logement de couplage (12) présente un guidage de verrou (26) pouvant être déplacé de manière relativement mobile, en particulier de manière mobile linéairement, le long de l'axe de stator (3), lequel est pourvu d'évidements de guidage (35), dans lesquels les verrous (36) sont logés de manière mobile de manière transversale par rapport à l'axe de stator (3), dans laquelle le guidage de verrou (26) est logé de manière mobile sur une douille de guidage (25), qui est pourvue d'une face de commande (57), qui est réalisée pour une commande de déplacement des verrous (36) de telle manière qu'un déplacement relatif du guidage de verrou (26) par rapport à la douille de guidage (25) entraîne un déplacement des verrous (36) dans la direction radiale.

7. Broche à moteur (1) selon la revendication 6, **caractérisée en ce que** la douille de guidage (25) présente un espace annulaire (38) ouvert d'un côté dans la direction axiale, de forme annulaire circulaire, et qu'est associé au guidage de verrou (26) un piston annulaire (34), qui est logé dans l'espace annulaire (38) tout en assurant l'étanchéité de manière mobile axialement de sorte que l'espace annulaire (38) et le piston annulaire (34) délimitent un espace de travail (39) à taille variable pour former un actionneur fluidique destiné à déplacer axialement le guidage de verrou (26) et destiné à actionner les verrous (36).

8. Broche à moteur (1) selon la revendication 7, **caractérisée en ce que** le guidage de verrou (26) est monté dans le stator (2) de manière mobile entre une position de verrouillage pour la deuxième partie de couplage (42) et une partie de déverrouillage pour la deuxième partie de couplage (42), et que le guidage de verrou (26) vient en prise dans la position de déverrouillage avec une zone de couplage (31) définie par des surfaces intérieures (29, 30) du deuxième logement de couplage (12), laquelle est réalisée pour loger la deuxième partie de couplage (42) pour repousser la deuxième partie de couplage (42).

9. Broche à moteur (1) selon la revendication 6, 7 ou 8, **caractérisée en ce qu'**est associé au guidage de verrou (26) au moins un ressort (27), qui est réalisé pour fournir une force axiale agissant sur le guidage de verrou (26) en direction de la position de verrouillage.

10. Broche à moteur (1) selon l'une quelconque des revendications précédentes, **caractérisée en ce que**
les corps de roulement (65) du deuxième palier rotatif (8) sont réalisés en tant que rouleaux cylindriques orientés de manière parallèle à l'axe de rotor (6), et que la bague intérieure (62) du deuxième palier rotatif (8) est pourvue d'une rainure annulaire (64) périphérique, dont les parois latérales sont réalisées pour un guidage axial des rouleaux cylindriques, et que la bague extérieure (63) du deuxième palier rotatif (8) présente une surface intérieure (72) réalisée de manière cylindrique circulaire, sur laquelle les rouleaux cylindriques reposent.

11. Broche à moteur (1) selon la revendication 1, **caractérisée en ce que** la surface extérieure (50) de la deuxième partie de couplage (42) forme conjointement avec l'évidement à verrou (52) une face volumétrique pour le verrou (36), qui est réalisée pour un déplacement du verrou (36) dirigé vers l'extérieur radialement lors d'un déplacement axial du guidage de verrou (26) depuis la position de verrouillage dans la position de déverrouillage.

12. Broche à moteur (1) selon la revendication 1, **caractérisée en ce que** le stator (2) équipé du premier système magnétique (9) et le rotor (4) équipé du deuxième système magnétique (10) forment un moteur électrique issu du groupe : moteur synchrone, moteur asynchrone, dans laquelle le premier système magnétique (9) et le deuxième système magnétique (10) comprennent respectivement au moins un composant issu du groupe : bobine magnétique, bobine de court-circuitage, aimant permanent.
